(19) Europäisches Patentamt
European Patent Office
Office européen des brevets

(11) **EP 3 493 205 B1**

(12) **EUROPEAN PATENT SPECIFICATION**

(45) Date of publication and mention
of the grant of the patent:
**23.12.2020 Bulletin 2020/52**

(51) Int Cl.:
*G10L 25/78* (2013.01)     *G10L 15/20* (2006.01)

(21) Application number: **18214325.5**

(22) Date of filing: **24.12.2010**

(54) **METHOD AND APPARATUS FOR ADAPTIVELY DETECTING A VOICE ACTIVITY IN AN INPUT AUDIO SIGNAL**

VERFAHREN UND VORRICHTUNG ZUR ADAPTIVEN DETEKTION EINER STIMMAKTIVITÄT IN EINEM AUDIOEINGANGSSIGNAL

PROCÉDÉ ET APPAREIL PERMETTANT DE DÉTECTER DE FAÇON ADAPTATIVE UNE ACTIVITÉ VOCALE DANS UN SIGNAL AUDIO D'ENTRÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.06.2019 Bulletin 2019/23**

(60) Divisional application:
**20173782.2 / 3 726 530**

(62) Document number(s) of the earlier application(s) in accordance with Art. 76 EPC:
**14156678.6 / 2 743 924**
**10861147.6 / 2 619 753**

(73) Proprietor: **Huawei Technologies Co., Ltd.**
**Shenzhen**
**Guangdong 518129 (CN)**

(72) Inventor: **Wang, Zhe**
**shenzhen, Guangdong (CN)**

(74) Representative: **Kreuz, Georg Maria**
**Huawei Technologies Duesseldorf GmbH**
**Riesstraße 25**
**80992 München (DE)**

(56) References cited:
**EP-A1- 2 159 788     US-A- 5 649 055**

**Description**

## FIELD OF THE INVENTION

The invention relates to a method and an apparatus for adaptively detecting a voice activity in an input audio signal consisting of frames and in particular to a voice activity detection method and apparatus using non-linearly processed sub-band segmental signal to noise ratio parameters.

## BACKGROUND OF THE INVENTION

Voice activity detection (VAD) is generally a technique which is provided to detect a voice activity in a signal. Voice activity detectors are widely used in the telecommunication industry. The function of a voice activity detector is to detect in communication channels the presence or absence of active signals such as speech or music. The voice activity detector can be provided within a communication network wherein the network can decide to compress a transmission bandwidth in periods where active signals are absent or to perform other processing depending on a voice activity detection decision indicating whether there is an active signal or not. A voice activity detector can compare a feature parameter or a set of feature parameters extracted from the input signal to corresponding threshold values and determine whether the input comprises an active signal or not based on the comparison result. The performance of a voice activity detector is determined to a high degree on the choice of the used feature parameters. There have been many feature parameters proposed for voice activity detection such as energy based parameters, spectral envelope based parameters, entropy based parameters or higher order statistics based parameters. In general, energy based parameters provide a good voice activity detection performance. In recent years sub-band SNR based parameters as a kind of energy based parameters have been widely used in the telecommunication industry. In sub-band SNR based voice activity detectors the SNR for each frequency sub-band of an input frame is detected and the SNRs of all sub-bands are added to provide a segmental SNR. This segmental SNR parameter SSNR can be compared with a threshold value to make a voice activity detection decision VADD. The used threshold is usually a variable which is adaptive to a long term SNR of the input signal or a level of background noise.

In a recently completed ITU-T Recommendation G.720.1 the conventional SSNR parameter has been improved by applying a non-linear processing to get a modified SSNR. The calculated modified segmental SNR is also compared to a threshold which is determined from a threshold table according to the long term SNR of the input signal, the background noise variation and the voice activity detection operating point where the VAD operating point defines the tradeoff of the VAD decision between active and inactive detection, for example a quality-preferred operating point will make the VAD favor the detection of active signals and vice versa.

Although the modified segmental SNR parameter used by G.720.1 does increase the performance of voice activity detection the VAD performance in a non-stationary and low SNR background environment still needs improvement. Conventional voice activity detectors are designed to balance their performances in various background noise conditions. Accordingly, conventional voice activity detectors have a performance which is sub-optimal for specific conditions and in particular in a non-stationary and low SNR background environment.

Further prior art is known from EP2159788A1.

Accordingly, a goal of the present invention is to provide a method and an apparatus for detecting a voice activity in an input audio signal which have a high VAD performance.

## SUMMARY OF THE INVENTION

As apparent from the above, it is an object of the invention to overcome the shortcomings in the prior art. This object of the invention is solved by the independent claims. Specific embodiments are defined in the dependent claims.

As noted, the invention is set forth in the independent claims. All following occurrences of the word "embodiment(s)", if referring to feature combinations different from those defined by the independent claims, refer to examples which were originally filed but which do not represent embodiments of the presently claimed invention; these examples are still shown for illustrative purposes only.

The invention provides according to a first aspect a method for adaptively detecting a voice activity in an input audio signal consisting of frames comprising the steps of:

> (a) determining a noise characteristic of the input signal based at least on a received input frame of the input audio signal,
> (e) deriving a VAD parameter (vp) adapted to or selected dependent on said noise characteristic of the input audio signal; and
> (f) comparing the derived VAD parameter with a threshold value to provide a voice activity detection decision.

Implementation forms of the first aspect may use energy based parameters, spectral envelope based parameters, entropy based parameters or higher order statistics based parameters as VAD parameters.

In a possible implementation of the first aspect of the present invention, the invention provides a method for adaptively detecting a voice activity in an input audio signal consisting of frames comprising the steps of:

(a) determining a noise characteristic of the input signal based at least on a received input frame of the input audio signal,
(b) dividing said received input frame of said audio signal into several sub-bands,
(c) obtaining a SNR for each sub-band of said input frame,
(d) calculating a sub-band specific parameter based on said respective sub-band's SNR for each sub-band using an adaptive function,
wherein at least one parameter of the adaptive function is selected dependent on said noise characteristic of the input audio signal,
(e) deriving a modified segmental SNR as said VAD parameter by adding the sub-band specific parameters, and
(f) comparing the derived modified segmental SNR with a threshold value to provide a VAD decision.

The invention according to the first aspect of the present invention provides more efficiency and a better quality of VAD. The efficiency of VAD is the ability to detect noise characteristic such as background noise while the quality of VAD relates to the ability to detect active signals such as speech or music in the input audio signal.

In a possible implementation of the first aspect of the present invention the determined noise characteristic of said input audio signal is formed by the long term SNR of the input audio signal.

In a further possible implementation of the first aspect of the present invention the determined noise characteristic of said input audio signal is formed by a background noise variation of the input audio signal.

In a still further possible implementation of the first aspect of the present invention the determined noise characteristic of the input audio signal is formed by a combination of the long term SNR and the background noise variation of the input audio signal.

In an implementation of the first aspect of the present invention the adaptive function used for calculating a sub-band specific parameter is formed by a non-linear function.

In a possible implementation of the method for adaptively detecting a voice activity in an input audio signal according to the first aspect of the present invention a SNR for each sub-band of the input frame is obtained by obtaining a signal energy for each sub-band, e.g. a signal energy for each sub-band of the input frame.

In a further possible implementation of the method for adaptively detecting a voice activity in an input audio signal according to the first aspect of the present invention the SNR for each sub-band of said input frame is obtained by estimating a background noise energy for each sub-band.

In a further possible implementation of the method for adaptively detecting a voice activity in an input audio signal according to the first aspect of the present invention the SNR for each sub-band of said input frame is obtained by calculating the SNR for each sub-band depending on the signal energy and the background noise energy of the respective sub-band.

In a further possible implementation of the method for adaptively detecting a voice activity in an input audio signal according to the first aspect of the present invention the signal energy for each sub-band of said input frame is a smoothed signal energy forming a weighted average between the input frame and at least one previous frame.

In a further possible implementation of the method for adaptively detecting a voice activity in an input audio signal according to the first aspect of the present invention the modified SSNR is calculated by adding sub-band specific parameters as follows:

$$mssnr = \sum_{i=1}^{N} sbsp(i)$$

wherein N is the number of frequency sub-bands into which said input frame is divided,
wherein sbsp(i) is a sub-band specific parameter calculated based on the sub-band's SNR for each sub-band using an adaptive function.

In a possible implementation of the method for adaptively detecting a voice activity in an input audio signal according to the first aspect of the present invention the modified segmental SNR is calculated as follows:

$$mssnr = \sum_{i=1}^{N} \left( f\big(snr(i)\big) + \alpha \right)^{\beta}$$

wherein snr(i) is a SNR of the i-th sub-band of the input frame,
N is the number of frequency sub-bands into which said input frame is divided,
$(f(snr(i))+\alpha)^{\beta}$ is the adaptive function (AF) used to calculate the sub-band specific parameter sbsp(i), and
$\alpha, \beta$ are two configurable variables of the adaptive function (AF).

In a possible implementation of the method for adaptively detecting a voice activity in an input audio signal according to the first aspect of the present invention the first variable $\alpha$ of the adaptive function (AF) depends on a long term SNR (lsnr) of the input audio signal as follows:

$$\alpha = g\ (i,\ lsnr)$$

wherein g is a linear or non-linear function and
wherein the second variable $\beta$ of the adaptive function (AF) depends on the long term SNR (lsnr) and $\varphi$:

$$\beta = h\ (lsnr,\ \varphi\ )$$

wherein h is non-linear function and

$$\varphi = f(snr\ (i)) + \alpha.$$

In a further implementation of the method for adaptively detecting a voice activity in an input audio signal according to the first aspect of the present invention the first variable $\alpha$ of the adaptive function ((AF)) is calculated by:

$$\alpha = g\ (i,\ lnsr) = a(i) \cdot lsnr + b(i)$$

wherein a (i), b (i) are real numbers depending on a sub-band index i and
the second variable $\beta$ of the adaptive function ((AF)) is calculated by:

$$\beta = h(lsnr, \varphi) = \begin{cases} \beta_1 & \varphi \geq d\ and\ lsnr > e_2 \\ \beta_2 & \varphi \geq d\ and\ e_1 < lsnr \leq e_2 \\ \beta_3 & \varphi \geq d\ and\ lsnr \leq e_1 \\ \beta_4 & otherwise \end{cases}$$

wherein $\beta 1 < \beta 2 < \beta 3$ and $\beta 4$ and d and $e1 < e2$ being integer or floating numbers and wherein lsnr is the long term SNR of the input audio signal.
In a possible implementation of the method for adaptively detecting a voice activity in an input audio signal according to the first aspect of the present invention the derived modified segmental SNR (mssnr) is compared with a threshold value (thr) being set to

$$thr = \begin{cases} k_1 & lsnr > e_2 \\ k_2 & e_1 < lsnr \leq e_2 \\ k_3 & lsnr \leq e_1 \end{cases}$$

wherein k1 > k2 > k3 and e1 < e2 being integer or floating numbers and wherein the voice activity detection decision (VADD) is generated as follows:

$$VADD = \begin{cases} 1 & mssnr > thr \\ 0 & mssnr \leq thr \end{cases}$$

wherein VADD = 1 represents an active frame with voice activity being present and
VADD = 0 represents a passive frame with voice activity being absent.

In a possible implementation of the method for adaptively detecting a voice activity input audio signal according to the first aspect of the present invention the first variable $\alpha$ of the adaptive function ((AF)) is calculated by:

$$\alpha = g\,(i,\, lsnr,\, \varepsilon) = a\,(i) \cdot lsnr + b\,(i) + c\,(\varepsilon)$$

wherein a (i), b (i) are real numbers depending on a sub-band index i and
c ($\varepsilon$) is a real number depending on the estimated fluctuation of the background noise of the input audio signal and

wherein the second variable $\beta$ of the adaptive function ((AF)) is calculated by:

$$\beta = h(lsnr, \varphi, \varepsilon) = \begin{cases} \beta_1 & \varphi \geq d \ and \ lsnr > e_2 \ and \ \varepsilon \leq p \\ \beta_2 & \varphi \geq d \ and \ lsnr > e_2 \ and \ \varepsilon > p \\ \beta_3 & \varphi \geq d \ and \ e_1 < lsnr < e_2 \ and \ \varepsilon \leq p \\ \beta_4 & \varphi \geq d \ and \ e_1 < lsnr < e_2 \ and \ \varepsilon > p \\ \beta_5 & \varphi \geq d \ and \ lsnr \leq e_1 \ and \ \varepsilon \leq p \\ \beta_6 & \varphi \geq d \ and \ lsnr \leq e_1 \ and \ \varepsilon > p \\ \beta_7 & \varphi < d \end{cases}$$

wherein $\varphi$ = f(snr (i)) + $\alpha$ and $\varepsilon$ is the estimated fluctuation of the background noise and d and e1 < e2 and p being integer or floating numbers.
In a possible implementation of a method for adaptively detecting a voice activity in an input audio signal according to the first aspect of the present invention the derived modified segmental SNR (mssnr) is compared with a threshold value (thr) being set to:

$$thr = \begin{cases} q_1 + r_1 \cdot Min\left[\dfrac{lsnr - v_1}{W_1}, 1\right] & lsnr > e_2 \\[4mm] q_2 + r_2 Min\left[\dfrac{lsnr - v_2}{W_2}\right] & e_1 < lsnr \leq e_2 \\[4mm] q_3 + r_3 \cdot Max\left[Min\,\dfrac{lsnr - v_3}{W_3}, 1\right] & lsnr \leq e_1 \end{cases}$$

wherein q1, q2, q3 and r1, r2, r3 and e1 < e2 and
v1, v2, v3 and w1, w2, w3 being integer or floating numbers,

wherein the voice activity detection decision (VADD) is generated as follows:

$$VADD = \begin{cases} 1 & mssnr > thr \\ 0 & mssnr \leq thr \end{cases}$$

wherein VADD = 1 represents an active frame with voice activity being present and
VADD = 0 represents a passive frame with voice activity being absent.

The invention further provides according to a second aspect a VAD apparatus for detecting a voice activity in an input audio signal consisting of frames
wherein said VAD apparatus comprises:

a SNR based VAD parameter calculation unit which calculates a SNR (snr) for each sub-band of an applied input frame and a sub-band specific parameter (sbsp) based on said respective sub-band SNR (snr) for each sub-band using an adaptive function (AF) and derives a modified segmental SNR (mssnr) by adding the sub-band's specific parameters and
a VAD decision generation unit which generates a VAD decision (VADD) by comparing the modified segmental SNR (mssnr) with a threshold value.

In a possible implementation of the VAD apparatus according to the second aspect of the present invention the apparatus comprises a noise characteristic determination unit which determines a noise characteristic (nc) of the input signal based at least on a received input frame of the input audio signal.
In a possible implementation of the VAD apparatus according to the second aspect of the present invention the a noise characteristic determination unit comprises a long term SNR estimation unit which calculates a long term SNR of said input audio signal.
In a further possible implementation of the VAD apparatus according to the second aspect of the present invention the noise characteristic determination unit comprises a background noise variation estimation unit which calculates a stationarity or fluctuation of the background noise of the input audio signal.
In a further possible implementation of the VAD apparatus according to the second aspect of the present invention the noise characteristic determination unit comprises a long term SNR estimation unit which calculates a long term SNR of the input audio signal and a background noise variation estimation unit which calculates a stationarity or fluctuation of the background noise of said input audio signal.
In a further possible implementation of the VAD apparatus according to the second aspect of the present invention the adaptive function ((AF)) is selected dependent on at least one noise characteristic (nc) determined by said noise characteristic determination unit.
The invention further provides an audio signal processing device according to a third aspect of the present invention wherein said audio signal processing device comprises an audio signal processing unit for processing an audio input signal depending on a VAD decision (VADD) provided by the VAD apparatus according to the second aspect of the present invention.

**BRIEF DESCRIPTION OF FIGURES**

In the following possible implementations of different aspects of the present invention are described with reference to the enclosed figures in more detail.

Fig. 1 shows a flow chart for illustrating a possible implementation of a method for adaptively detecting a voice activity in an input audio signal according to a first aspect of the present invention;

Fig. 2 shows a block diagram of a VAD apparatus for detecting a voice activity in an input audio signal according to a second aspect of the present invention;

Fig. 3 shows a block diagram of an audio signal processing device according to a third aspect of the present invention.

**DETAILED DESCRIPTION OF EMBODIMENTS**

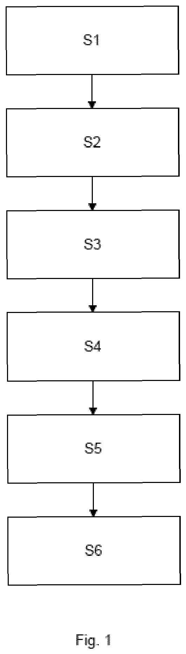

Fig. 1 shows a flow chart of a possible implementation of a method for adaptively detecting a voice activity in an input audio signal according to a first aspect of the present invention. In a first step S1 of the exemplary implementation of the first aspect of the present invention a noise characteristic nc of the input audio signal is determined based at least on a received input frame of the input audio signal. The input audio signal comprises signal frames. In a possible implementation the input signal is segmented into frames of predetermined length of e.g. 20ms and inputted frame by frame. In other implementations the length of the input frames can vary. The noise characteristic nc of the input audio signal determined in step S1 can be a long term SNR lsnr calculated by a long term SNR estimation unit. In another possible implementation the noise characteristic nc determined in step S1 is formed by a background noise variation calculated by a background noise variation estimation unit which calculates a stationarity or fluctuation ε of the background noise bn of the input audio signal. It is also possible that the noise characteristic nc determined in step S1 consists both of a long term SNR lsnr and a background noise variation.

In a further step S2 the received input frame of the input audio signal is divided into several frequency sub-bands.

In a further step S3 a sub-band specific parameter sbsp is calculated based on the sub-band's SNR for each sub-band using an adaptive function AF. In a possible implementation a power spectrum is obtained for each input frame through a fast fourier transformation (FFT) and the obtained power spectrum is divided into a predetermined number of sub-bands with non-linear width. Energies for each sub-band are calculated wherein the energy for each sub-band of the input frame can in a possible implementation be formed by a smoothed energy that is formed by a weighted average of the energies for the same sub-band between the input frame and at least one previous frame. In a possible implementation of the first aspect of the present invention the sub-band SNRs (snr) can be calculated as the modified logarithmic SNRs of the frequency sub-bands:

$$snr\,(i) = \log_{10}\left(\frac{E(i)}{E_n(i)}\right)$$

wherein E(i) is the energy of ith sub-band of the input frame and En(i) is the energy of the ith sub-band of the background noise estimate. The background noise estimate can be calculated by the background noise estimation unit where the energy of each sub-band of the background noise estimate is calculated by moving-averaging the energies of each sub-band among background noise frames detected. This can be expressed as:

$$E_n(i) = \lambda \cdot E_n(i) + (1 - \lambda) \cdot E(i)$$

where E(i) is the energy of the ith sub-band of the frame detected as background noise, $\lambda$ is a "forgetting factor" usually in a range between 0.9 - 0.99.

After having obtained a SNR (snr) for each sub-band of said input frame in step S3 a sub-band specific parameter (sbsp) is calculated in step S4 based on the respective SNR (snr) of the respective sub-band using an adaptive function (AF). In a possible implementation of the method for adaptively detecting a voice activity in an input audio signal at least one parameter of the adaptive function (AF) is selected dependent of the determined noise characteristic of the input audio signal. The noise characteristic nc determined in step S1 can comprise a long term SNR and/or a background noise variation of the input audio signal. The adaptive function AF is a non-linear function.

In a possible implementation of the method for adaptively detecting a voice activity in an input audio signal according to the first aspect of the present invention in step S5 a modified segmental SNR (mssnr) is derived by adding the sub-band's specific parameters (sbsp) as follows:

$$mssnr = \sum_{i=1}^{N} sbsp(i)$$

wherein N is the number of frequency sub-bands into which said input frame is divided and
wherein sbsp(i) is a sub-band specific parameter calculated based on the sub-band's SNR for each sub-band using the adaptive function (AF). In a possible implementation of the first aspect of the present invention the modified segmental SNR (mssnr) is calculated as follows:

$$mssnr = \sum_{i=1}^{N} \left(f\big(snr(i)\big) + \alpha\right)^{\beta}$$

wherein snr(i) is the SNR of the ith sub-band of the input frame,
N is the number of frequency sub-bands into which said input frame is divided and:

$AF = (f(snr(i))+\alpha)^\beta$ being the adaptive function used to calculate the sub-band specific parameter sbsp(i), wherein $\alpha$, $\beta$ are two configurable variables of the adaptive function (AF).

In a possible implementation of the first aspect of the present invention the first variable $\alpha$ of the adaptive function (AF) depends on a long term SNR (lsnr) of the input audio signal as follows:

$$\alpha = g\,(i,\,lsnr)$$

wherein g is a linear or non-linear function and
wherein the second variable $\beta$ of the adaptive function ((AF)) depends on the long term SNR (lsnr) and a value $\varphi$:

$$\beta = h\,(lsnr,\,\varphi\,)$$

wherein h is non-linear function and

$$\varphi = f(snr\,(i)) + \alpha.$$

In a possible implementation of the method according to the first aspect to the present invention the first variable $\alpha$ of the adaptive function (AF) is calculated by:

$$\alpha = g\,(i,\,lnsr) = a(i) \cdot lsnr + b(i)$$

wherein a (i), b (i) are real numbers depending on a sub-band index i and
the second variable $\beta$ of the adaptive function ((AF)) is calculated by:

$$\beta = h(lsnr,\varphi) = \begin{cases} \beta_1 & \varphi \ge d\ and\ lsnr > e_2 \\ \beta_2 & \varphi \ge d\ and\ e_1 < lsnr \le e_2 \\ \beta_3 & \varphi \ge d\ and\ lsnr \le e_1 \\ \beta_4 & otherwise \end{cases}$$

wherein $\beta1 < \beta2 < \beta3$ and $\beta4$ and d as well as e1 < e2 being integer or floating numbers and wherein lsnr is the long term SNR of the input audio signal.

In a possible specific implementation $\beta1 = 4$, $\beta2 = 10$, $\beta3 = 15$ and $\beta4 = 9$. In this specific implementation d is set to 1 and e1 = 8 and e2 = 18.

The modified segmental SNR (msnr) is derived in step S5 by adding the sub-band's specific parameters (sbsp). In a further step S6 of the implementation of the method for adaptively detecting a voice activity in an input audio signal as shown in Fig. 1 the derived modified segmental SNR (mssnr) is compared with a threshold value thr to provide a VAD decision (VADD).

In a possible implementation the derived modified segmental SNR (mssnr) is compared with a threshold value thr which is set to:

$$thr = \begin{cases} k_1 & lsnr > e_2 \\ k_2 & e_1 < lsnr \le e_2 \\ k_3 & lsnr \le e_1 \end{cases}$$

wherein k1 > k2 > k3 and e1 < e2 being integer or floating numbers and wherein the VAD decision (VADD) is generated as follows:

$$VADD = \begin{cases} 1 & mssnr > thr \\ 0 & mssnr \leq thr \end{cases}$$

wherein VADD = 1 represents an active frame with voice activity being present
and VADD = 0 represents a passive frame with voice activity being absent.

In a possible specific implementation k1 = 135, k2 = 35, k3 = 10 and e1 is set to 8 whereas e2 is set to 18.

In a further possible implementation of the method for adaptively detecting a voice activity in an input audio signal the first variable $\alpha$ of the adaptive function (AF) is calculated by:

$$\alpha = g\,(i, lsnr, \varepsilon) = a\,(i) \cdot lsnr + b\,(i) + c\,(\varepsilon)$$

wherein a (i), b (i) are real numbers depending on a sub-band index i and
c ($\varepsilon$) is a real number depending on the estimated fluctuation of the background noise bn of the input audio signal and

wherein the second variable $\beta$ of the adaptive function (AF) is calculated by:

$$\beta = h(lsnr, \varphi, \varepsilon) = \begin{cases} \beta_1 & \varphi \geq d \text{ and } lsnr > e_2 \text{ and } \varepsilon \leq p \\ \beta_2 & \varphi \geq d \text{ and } lsnr > e_2 \text{ and } \varepsilon > p \\ \beta_3 & \varphi \geq d \text{ and } e_1 < lsnr < e_2 \text{ and } \varepsilon \leq p \\ \beta_4 & \varphi \geq d \text{ and } e_1 < lsnr < e_2 \text{ and } \varepsilon > p \\ \beta_5 & \varphi \geq d \text{ and } lsnr \leq e_1 \text{ and } \varepsilon \leq p \\ \beta_6 & \varphi \geq d \text{ and } lsnr \leq e_1 \text{ and } \varepsilon > p \\ \beta_7 & \varphi < d \end{cases}$$

wherein $\varphi$ = f(snr (i)) + $\alpha$ and $\varepsilon$ is the estimated fluctuation of the background noise bn and
d and e1 < e2 and p being integer or floating numbers.

In a specific implementation the parameters are set as follows:

$\beta$1 = 3, $\beta$2 = 4, $\beta$3 = 7, $\beta$4 = 10, $\beta$5 = 8, $\beta$6 = 15, $\beta$7 = 15 and
d = 1 and e1 = 8 and e2 = 18 and p = 40.

In an implementation of the method adaptively detecting a voice activity in an input audio signal according to the first aspect of the present invention the derived modified segmental SNR (mssnr) is compared with a threshold value being thr set to:

$$
thr = \begin{cases} q_1 + r_1 \cdot Min\left[\dfrac{lsnr - v_1}{W_1}, 1\right] & lsnr > e_2 \\[2ex] q_2 + r_2 Min\left[\dfrac{lsnr - v_2}{W_2}, 1\right] & e_1 < lsnr \le e_2 \\[2ex] q_3 + r_3 \cdot Max\left[Min\dfrac{lsnr - v_3}{W_3}, 1\right] & lsnr \le e_1 \end{cases}
$$

wherein q1, q2, q3 and r1, r2, r3 and e1 < e2 and
v1, v2, v3 and w1, w2, w3 being integer or floating numbers.

In a specific implementation of the first aspect of the present invention q1 = 20, q2 = 30, q3 = 9 and r1 = 30, r2 = 10 and r3 = 2. Further, v1 = 18, v2 = 8 and v3 = 5 and w1 = 8, w2 = 10 and w3 = 3. Further, the parameters e1, e2 are set to e1 = 8 and e2 = 18.

Accordingly, in a possible embodiment not only a background noise estimation and a long term SNR estimation is performed but additionally also a background noise variation estimation is performed to determine a background noise fluctuation ε of the background noise of the input audio signal.

Two factors, α, β of the adaptive function (AF) adjust a trade-off of the discriminating power of the modified segmental SNR parameter. Different trade-offs significate that the detection is more favourable for either active or inactive detection for the received frames. Generally the higher the long term SNR (lsnr) of the input audio signal is the more favourable it is to adjust the modified segmental SNR (mssnr) for active detection by means of adjusting the corresponding coefficients α, β of the adaptive function (AF).

The VAD decision performed in step S6 can further go through a hard hang-over procedure. A hard hang-over procedure forces the VAD decisions for several frames to be active immediately after the VAD decision obtained in step S6 changes from active to inactive.

In a possible implementation of the method for adaptively detecting a voice activity in an input audio signal according to the first aspect of the present invention the background noise of the input audio signal is analyzed and a number representing the extent of stationarity or fluctuation of the background noise, denoted by ε, is generated. This fluctuation ε of the background noise bn can be calculated for example by:

$$
\varepsilon = \omega \cdot \varepsilon + (1 - \omega) \cdot ssnr_n
$$

wherein ω is a forgetting factor usually between 0.9 - 0.99 and ssnrn is the summation of snr(i) over all sub-bands of the frame detected as a background frame multiplied by a factor of e.g. 10.

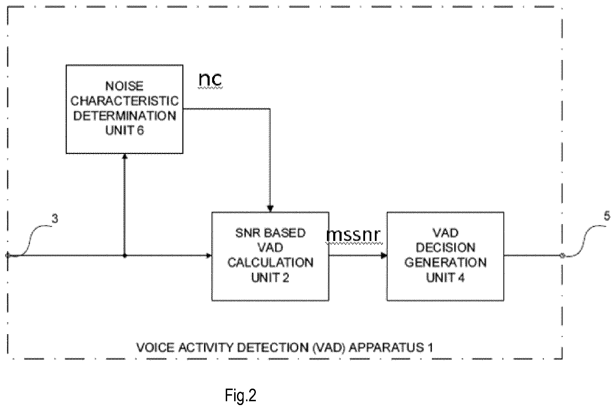

Fig. 2 shows a block diagram of a VAD apparatus 1 according to a second aspect of the present invention. The VAD apparatus 1 comprises a SNR based VAD parameter calculation unit 2 receiving an input audio signal applied to an input 3 of the VAD apparatus 1. The SNR based VAD parameter calculation unit 2 calculates a SNR to each sub-band of an applied input frame of the input audio signal and a sub-band's specific parameter (sbsp) based on said respective sub-band SNR (snr) for each sub-band using an adaptive function (AF) and derives a modified segmental SNR (mssnr) by adding the sub-band's specific parameters (sbsp). The derived modified segmental SNR (mssnr) is applied by the SNR based VAD parameter calculation unit 2 to a VAD decision generation unit 4 of the VAD apparatus 1. The VAD decision generation unit 4 generates a VAD decision (VADD) by comparing the modified segmental SNR (mssnr) with a threshold value (thr). The generated VAD decision (VADD) is output by the VAD apparatus 1 at an output 5.

In a possible implementation of the VAD apparatus 1 according to the second aspect of the present invention the VAD detection apparatus 1 further comprises a noise characteristic determination unit 6 as shown in fig. 2. The noise characteristic determination unit 6 determines a noise characteristic (nc) of the input signal based at least on a received input frame of the input audio signal applied to input 3 of the VAD apparatus 1. In an alternative implementation the noise characteristic (nc) is applied to the SNR based VAD parameter calculation unit 2 from an external noise characteristic determination entity. In a possible implementation of the VAD apparatus 1 according to the second aspect of the present invention the noise characteristic determination unit 6 as shown in fig. 2 can comprise a long term SNR estimation unit which calculates a long term SNR (lsnr) of the input audio signal. In a further possible implementation the noise characteristic determination unit 6 can also comprise a background noise variation estimation unit which calculates a stationarity or fluctuation ε of the background noise bn of the input audio signal. Accordingly, the noise characteristic (nc) provided by the noise characteristic determination unit 6 can comprise a long term SNR (lsnr) of the input audio signal and/or a stationarity or fluctuation (ε) of the background noise of the input audio signal. In a possible implementation an adaptive function (AF) used by the SNR based VAD parameter calculation unit 2 is selected dependent on at least one noise characteristic nc determined by said noise characteristic determination unit 6.

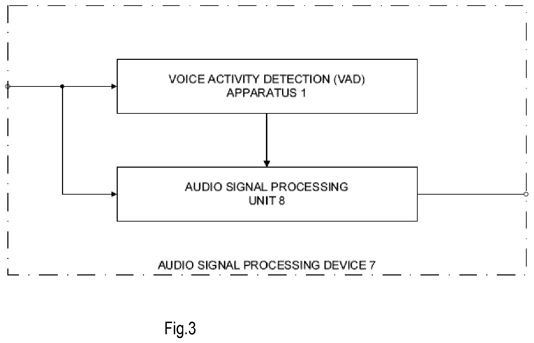

Fig. 3 shows a block diagram of an audio signal processing device 7 according to a third aspect of the present invention comprising VAD apparatus 1 providing a VAD decision (VADD) for an audio signal processing unit 8 within the audio signal processing device 7. The audio signal processing of an input audio signal is performed by the audio signal processing unit 8 depending on the received VAD decision (VADD) generated by the VAD apparatus 1 according to the first aspect of the present invention. The audio signal processing unit 8 can perform for example an encoding of the input audio signal based on the VAD decision (VADD). The audio signal processing device 7 can form part of a speech communication device such as a mobile phone. Further, the audio signal processing device 7 can be provided within a speech communication system such as an audio conferencing system, an echo signal cancellation system, a speech noise reduction system, a speech recognition system or a speech encoding system. The VAD decision (VADD) generated by the VAD apparatus 1 can control in a possible implementation a discontinuous transmission DTX mode of an entity, for example an entity in an cellular radio system, for example a GSM or LTE or CDMA system. The VAD apparatus 1 can enhance the system capacity of a system such as a cellular radio system by reducing co-channel interferences. Furthermore, the power consumption of a portable digital device within a cellular radio system can be reduced significantly.

**Claims**

1. A method for adaptively detecting a voice activity in an input audio signal consisting of frames, the method comprising:

   determining a noise characteristic (nc) of the input audio signal based at least on a received input frame of the input audio signal;
   dividing the received input frame of said audio signal into several sub-bands;
   obtaining a signal to noise ratio (snr) for each of the several sub-bands of said the received input frame;
   calculating a sub-band specific parameter (sbsp) based on the respective sub-band's signal to noise ratio (snr) for each of the several sub-band using an adaptive function (AF),
   wherein at least one parameter of the adaptive function (AF) is selected dependent on the noise characteristic (nc) of the input audio signal;
   deriving a modified segmental signal to noise ratio (mssnr) as a VAD parameter (vp) by adding the calculated sub-band specific parameters (sbsp); and
   comparing the derived VAD parameter (vp) with a threshold value (thr) to provide a voice activity detection decision (VADD),
   wherein the modified segmental signal to noise ratio (mssnr) is calculated as follows:

   $$mssnr = \sum_{i=1}^{N} \left( f(snr(i)) + \alpha \right)^{\beta}$$

   wherein snr(i) is the signal to noise ratio of the i-th sub-band of the input frame, N is the number of frequency sub-bands into which said input frame is divided, $(f(snr(i))+\alpha)^{\beta}$ is the adaptive function (AF) used to calculate the sub-band specific parameter sbsp(i), and $\alpha$, $\beta$ are two configurable variables of the adaptive function (AF).

2. The method according to claim 1, wherein the noise characteristic (nc) of the input audio signal is a long term signal to noise ratio (lsnr).

3. The method according to one of the preceding claims 1 or 2,
   wherein said signal to noise ratio (snr) for each of the several sub-bands of said input frame is obtained by

   obtaining a signal energy for each of the several sub-bands,
   estimating a background noise energy (bn) for each of the several sub-bands, and
   calculating the signal to noise ratio (snr) for each sub-band depending on the signal energy and the background noise energy of the respective sub-band.

4. The method according to claim 3,
wherein the signal energy for each sub-band of said input frame is a smoothed signal energy forming a weighted average between the input frame and at least one previous frame.

5. The method according to one of the preceding claims 1 to 4,
wherein the first variable $\alpha$ of the adaptive function (AF) depends on a long term signal to noise ratio (lsnr) of the input audio signal as follows:

$$\alpha = g\ (i,\ lsnr)$$

wherein g is a linear or non-linear function.

6. The method according to one of the preceding claims 1 to 5,
wherein the second variable $\beta$ of the adaptive function (AF) depends on the long term signal to noise ratio (lsnr) and $\varphi$ :

$$\beta = h\ (lsnr,\ \varphi\ )$$

wherein h is non-linear function and $\varphi = f(snr\ (i)) + \alpha$.

7. The method according to claim 5,
wherein the first variable $\alpha$ of the adaptive function (AF) is calculated by:

$$\alpha = g\ (i,\ lnsr) = a(i)\ \cdot\ lsnr + b(i)$$

wherein a (i), b (i) are real numbers depending on a sub-band index i and the second variable $\beta$ of the adaptive function (AF) is calculated by:

$$\beta = h(lsnr, \varphi) = \begin{cases} \beta_1 & \varphi \geq d\ and\ lsnr > e_2 \\ \beta_2 & \varphi \geq d\ and\ e_1 < lsnr \leq e_2 \\ \beta_3 & \varphi \geq d\ and\ lsnr \leq e_1 \\ \beta_4 & otherwise \end{cases}$$

wherein $\beta_1 < \beta_2 < \beta_3$ and $\beta_4$ and d and $e_1 < e_2$ being integer or floating numbers and
wherein lsnr is the long term signal to noise ratio (lsnr).

8. The method according to claim 7,
wherein the derived modified segmental signal to noise ratio (mssnr) is compared with a threshold value (thr) being set to:

$$thr = \begin{cases} k_1 & lsnr > e_2 \\ k_2 & e_1 < lsnr \leq e_2 \\ k_3 & lsnr \leq e_1 \end{cases}$$

wherein $k_1 > k_2 > k_3$ and $e_1 < e_2$ being integer or floating numbers and wherein the voice activity detection decision (VADD) is generated as follows:

$$VADD = \begin{cases} 1 & mssnr > thr \\ 0 & mssnr \leq thr \end{cases}$$

wherein VADD = 1 represents an active frame with voice activity being present and VADD = 0 represents a passive frame with voice activity being absent.

9. A voice activity detection apparatus for detecting a voice activity in an input audio signal consisting of frames, wherein the voice activity detection (VAD) apparatus comprises:

a signal to noise ratio based VAD parameter calculation unit which is configured to calculate a signal to noise ratio (snr) for each sub-band of an applied input frame and a sub-band specific parameter (sbsp) based on the respective signal to noise ratio (snr) for each sub-band using an adaptive function (AF), wherein at least one parameter of the adaptive function is selected on a noise characteristic of the input audio signal, and to derive a modified segmental signal to noise ratio (mssnr) by adding the sub-band specific parameters (sbsp); and a voice activity detection (VAD) decision generation unit which is configured to generate a voice activity detection decision (VADD) by comparing the modified segmental signal to noise ratio (mssnr) with a threshold value, wherein the modified segmental signal to noise ratio (mssnr) is calculated as follows:

$$mssnr = \sum_{i=1}^{N} \left( f\left( snr(i) \right) + \alpha \right)^{\beta}$$

wherein snr(i) is the signal to noise ratio of the i-th sub-band of the input frame, N is the number of frequency sub-bands into which said input frame is divided, $(f(snr(i))+\alpha)^{\beta}$ is the adaptive function (AF) used to calculate the sub-band specific parameter sbsp(i), and $\alpha$, $\beta$ are two configurable variables of the adaptive function (AF).

10. The apparatus according to claim 9, wherein the noise characteristic of the input audio signal is a long term signal to noise ratio.

11. The voice activity detection apparatus according to claim 9, wherein said apparatus comprises a noise characteristic determination unit which is configured to determine the noise characteristic (nc) of the input signal based at least on a received input frame of the input audio signal.

12. An audio signal processing device comprising a voice activity detection apparatus according to one of the preceding claims 9 to 11, and an audio signal processing unit for processing an audio input signal depending on a voice activity detection decision (VADD) provided by the voice activity detection apparatus.

**Patentansprüche**

1. Verfahren zum adaptiven Erkennen einer Sprachaktivität in einem Eingangsaudiosignal, das aus Rahmen besteht, wobei das Verfahren umfasst:

Bestimmen einer Rauscheigenschaft (noise characteristic, nc) des Eingangsaudiosignals auf der Grundlage von mindestens einem empfangenen Eingangsrahmen des Eingangsaudiosignals; Teilen des empfangenen Eingangsrahmens des Audiosignals in mehrere Teilbänder; Erhalten eines Signal-Rausch-Verhältnisses (signal to noise ratio, snr) für jedes der mehreren Teilbänder des empfangenen Eingangsrahmens; Berechnen eines teilbandspezifischen Parameters (sub-band specific parameter, sbsp) auf der Grundlage des jeweiligen Signal-Rausch-Verhältnisses (snr) jedes Teilbands für jedes der mehreren Teilbänder mithilfe einer adaptiven Funktion (AF), wobei mindestens ein Parameter der adaptiven Funktion (AF) in Abhängigkeit von der Rauscheigenschaft (nc) des Eingangsaudiosignals ausgewählt wird; Ableiten eines modifizierten segmentierten Signal-Rausch-Verhältnisses (mssnr) als ein VAD-Parameter (vp), indem die berechneten teilbandspezifischen Parameter (sbsp) addiert werden; und Vergleichen des abgeleiteten VAD-Parameters (vp) mit einem Schwellenwert (thr),

um eine Entscheidung der Sprachaktivitätserkennung (Voice Activity Detection Decision, VADD) bereitzustellen, wobei das modifizierte segmentierte Signal-Rausch-Verhältnis (mssnr) wie folgt berechnet wird:

$$mssnr = \sum_{i=1}^{N} \left( f\big(snr(i)\big) + \alpha \right)^{\beta}$$

wobei snr(i) das Signal-Rausch-Verhältnis des i-ten Teilbands des Eingangsrahmens ist, N die Anzahl von Frequenzteilbändern ist, in die der Eingangsrahmen geteilt wird, $(f(snr(i)) + \alpha)^{\beta}$ die adaptive Funktion (AF) ist, die verwendet wird, um den teilbandspezifischen Parameter sbsp(i) zu berechnen, und $\alpha$, $\beta$ zwei konfigurierbare Variablen der adaptiven Funktion (AF) sind.

2. Verfahren nach Anspruch 1, wobei die Rauscheigenschaft (nc) des Eingangsaudiosignals ein Langzeit-Signal-Rausch-Verhältnis (lsnr) ist.

3. Verfahren nach einem der vorhergehenden Ansprüche 1 oder 2, wobei das Signal-Rausch-Verhältnis (snr) für jedes der mehreren Teilbänder des Eingangsrahmens erhalten wird durch:

Erhalten einer Signalenergie für jedes der mehreren Teilbänder, Abschätzen einer Hintergrundrauschenergie (background noise energy, bn) für jedes der mehreren Teilbänder, und Berechnen des Signal-Rausch-Verhältnisses (snr) für jedes Teilband in Abhängigkeit von der Signalenergie und der Hintergrundrauschenergie des jeweiligen Teilbands.

4. Verfahren nach Anspruch 3, wobei die Signalenergie für jedes Teilband des Eingangsrahmens eine geglättete Signalenergie ist, die einen gewichteten Mittelwert aus dem Eingangsrahmen und mindestens einem vorhergehenden Rahmen bildet.

5. Verfahren nach einem der vorhergehenden Ansprüche 1 bis 4, wobei die erste Variable $\alpha$ der adaptiven Funktion (AF) von einem Langzeit-Signal-Rausch-Verhältnis (lsnr) des Eingangsaudiosignals wie folgt abhängig ist:

$$\alpha = g\,(i,\,lsnr)$$

wobei g eine lineare oder nichtlineare Funktion ist.

6. Verfahren nach einem der vorhergehenden Ansprüche 1 bis 5, wobei die zweite Variable $\beta$ der adaptiven Funktion (AF) von dem Langzeit-Signal-Rausch-Verhältnis (lsnr) und $\varphi$ abhängig ist:

$$\beta = h\,(lsnr,\,\varphi)$$

wobei h eine nichtlineare Funktion ist und $\varphi = f(snr\,(i)) + \alpha$ ist.

7. Verfahren nach Anspruch 5, wobei die erste Variable $\alpha$ der adaptiven Funktion (AF) berechnet wird durch:

$$\alpha = g\,(i,\,lsnr) = a(i) \cdot lsnr + b(i)$$

wobei a (i), b (i) reelle Zahlen sind, die von einem Teilbandindex i abhängig sind, und wobei die zweite Variable $\beta$ der adaptiven Funktion (AF) berechnet wird durch:

$$\beta = h(lsnr, \varphi) = \begin{cases} \beta_1 & \varphi \geq d \ und \ lsnr > e_2 \\ \beta_2 & \varphi \geq d \ und \ e_1 < lsnr \leq e_2 \\ \beta_3 & \varphi \geq d \ und \ lsnr \leq e_1 \\ \beta_4 & ansonsten \end{cases}$$

wobei $\beta_1 < \beta_2 < \beta_3$ ist und $\beta_4$ und d und $e_1 < e_2$ ganze Zahlen oder Gleitkommazahlen sind, und wobei lsnr das Langzeit-Signal-Rausch-Verhältnis (lsnr) ist.

8.  Verfahren nach Anspruch 7,
    wobei das abgeleitete modifizierte segmentierte Signal-Rausch-Verhältnis (mssnr) mit einem Schwellenwert (thr) verglichen wird, der eingestellt wird auf:

$$thr = \begin{cases} k_1 & lsnr > e_2 \\ k_2 & e_1 < lsnr \leq e_2 \\ k_3 & lsnr \leq e_1 \end{cases}$$

wobei $k_1 > k_2 > k_3$ und $e_1 < e_2$ ganze Zahlen oder Gleitkommazahlen sind, und wobei die Entscheidung der Sprachaktivitätserkennung (VADD) wie folgt erzeugt wird:

$$VADD = \begin{cases} 1 & mssnr > thr \\ 0 & mssnr \leq thr \end{cases}$$

wobei VADD = 1 einen aktiven Rahmen darstellt, in dem eine Sprachaktivität vorhanden ist, und wobei VADD = 0 einen passiven Rahmen darstellt, in dem keine Sprachaktivität vorhanden ist.

9.  Sprachaktivitätserkennungsvorrichtung für ein Erkennen einer Sprachaktivität in einem Eingangsaudiosignal, das aus Rahmen besteht,
    wobei die Sprachaktivitätserkennungsvorrichtung (VAD-Vorrichtung) umfasst:

    eine Berechnungseinheit für Signal-Rausch-Verhältnis-basierte VAD-Parameter, die konfiguriert ist zum Berechnen eines Signal-Rausch-Verhältnisses (snr) für jedes Teilband eines angewandten Eingangsrahmens und eines teilbandspezifischen Parameters (sub-band specific parameter, sbsp) auf der Grundlage des jeweiligen Signal-Rausch-Verhältnisses (snr) für jedes Teilband mithilfe einer adaptiven Funktion (AF), wobei mindestens ein Parameter der adaptiven Funktion abhängig von einer Rauscheigenschaft des Eingangsaudiosignals ausgewählt wird, und zum Ableiten eines modifizierten segmentierten Signal-Rausch-Verhältnisses (mssnr), indem die teilbandspezifischen Parameter (sbsp) addiert werden; und
    eine Entscheidungserzeugungseinheit für eine Sprachaktivitätserkennung (VAD), die konfiguriert ist zum Erzeugen einer Entscheidung der Sprachaktivitätserkennung (VADD), indem das modifizierte segmentierte Signal-Rausch-Verhältnis (mssnr) mit einem Schwellenwert verglichen wird,
    wobei das modifizierte segmentierte Signal-Rausch-Verhältnis (mssnr) wie folgt berechnet wird:

$$mssnr = \sum_{i=1}^{N} \left( f\big(snr(i)\big) + \alpha \right)^{\beta}$$

wobei snr(i) das Signal-Rausch-Verhältnis des i-ten Teilbands des Eingangsrahmens ist, N die Anzahl von Frequenzteilbändern ist, in die der Eingangsrahmen geteilt wird, $(f(snr(i)) + \alpha)^{\beta}$ die adaptive Funktion (AF) ist, die verwendet wird, um den teilbandspezifischen Parameter sbsp(i) zu berechnen, und $\alpha$, $\beta$ zwei konfigurierbare Variablen der adaptiven Funktion (AF) sind.

10. Vorrichtung nach Anspruch 9, wobei die Rauscheigenschaft des Eingangsaudiosignals ein Langzeit-Signal-Rausch-Verhältnis ist.

**11.** Sprachaktivitätserkennungsvorrichtung nach Anspruch 9,
wobei die Vorrichtung eine Bestimmungseinheit für Rauscheigenschaften umfasst, die konfiguriert ist, um eine Rauscheigenschaft (nc) des Eingangssignals auf der Grundlage von mindestens einem empfangenen Eingangsrahmen des Eingangsaudiosignals zu bestimmen.

**12.** Audiosignalbearbeitungsvorrichtung, die eine Sprachaktivitätserkennungsvorrichtung nach einem der Ansprüche 9 bis 11 und eine Audiosignalbearbeitungseinheit zum Bearbeiten eines Eingangsaudiosignals in Abhängigkeit von einer Entscheidung der Sprachaktivitätserkennung (VADD) umfasst, die von der Sprachaktivitätserkennungsvorrichtung bereitgestellt wird.

**Revendications**

**1.** Procédé de détection adaptative d'une activité vocale dans un signal audio d'entrée constitué de trames, le procédé comprenant :

la détermination d'une caractéristique de bruit (nc) du signal audio d'entrée sur la base au moins d'une trame d'entrée reçue du signal audio d'entrée ;
la division de la trame d'entrée reçue dudit signal audio en plusieurs sous-bandes ;
l'obtention d'un rapport signal sur bruit (snr) pour chacune des multiples sous-bandes de ladite trame d'entrée reçue ;
le calcul d'un paramètre spécifique de sous-bande (sbsp) sur la base du rapport signal sur bruit (snr) de la sous-bande respective pour chacune des multiples sous-bandes en utilisant une fonction adaptative (AF), dans lequel au moins un paramètre de la fonction adaptative (AF) est sélectionné en fonction de la caractéristique de bruit (nc) du signal audio d'entrée ;
la déduction d'un rapport signal sur bruit segmenté modifié (mssnr) en tant que paramètre VAD (vp) en ajoutant les paramètres spécifiques de sous-bande (sbsp) calculés; et
la comparaison du paramètre VAD (vp) déduit à une valeur de seuil (thr) afin de fournir une décision de détection d'activité vocale (VADD),
dans lequel le rapport signal sur bruit segmenté modifié (mssnr) est calculé comme suit :

$$mssnr = \sum_{i=1}^{N} \left( f\big(snr(i)\big) + \alpha \right)^{\beta}$$

où snr(i) est le rapport signal sur bruit de la i-ième sous-bande de la trame d'entrée, N est le nombre de sous-bandes de fréquence en lesquelles ladite trame d'entrée est divisée, $(f(snr(i))+\alpha)^{\beta}$ est la fonction adaptative (AF) utilisée pour calculer le paramètre spécifique de sous-bande sbsp(i), et $\alpha$, $\beta$ sont deux variables configurables de la fonction adaptative (AF).

**2.** Procédé selon la revendication 1, dans lequel la caractéristique de bruit (nc) du signal audio d'entrée est un rapport signal sur bruit à long terme (lsnr).

**3.** Procédé selon l'une des revendications 1 et 2 précédentes,
dans lequel ledit rapport signal sur bruit (snr) pour chacune des multiples sous-bandes de ladite trame d'entrée est obtenu par
obtention d'une énergie de signal pour chacune des multiples sous-bandes, estimation d'une énergie de bruit de fond (bn) pour chacune des multiples sous-bandes, et
calcul du rapport signal sur bruit (snr) pour chaque sous-bande en fonction de l'énergie de signal et de l'énergie de bruit de fond de la sous-bande respective.

**4.** Procédé selon la revendication 3,
dans lequel l'énergie de signal pour chaque sous-bande de ladite trame d'entrée est une énergie de signal lissée formant une moyenne pondérée entre la trame d'entrée et au moins une trame précédente.

**5.** Procédé selon l'une des revendications 1 à 4 précédentes,
dans lequel la première variable $\alpha$ de la fonction adaptative (AF) dépend d'un rapport signal sur bruit à long terme (lsnr) du signal audio d'entrée comme suit :

$$\alpha = g\,(i,\,lsnr)$$

où g est une fonction linéaire ou non linéaire.

**6.** Procédé selon l'une des revendications 1 à 5 précédentes,
dans lequel la seconde variable $\beta$ de la fonction adaptative (AF) dépend du rapport signal sur bruit à long terme (lsnr) et $\varphi$ :

$$\beta = h\,(lsnr,\,\varphi)$$

où h est une fonction non linéaire et $\varphi$ = f(snr (i)) + a.

**7.** Procédé selon la revendication 5,
dans lequel la première variable $\alpha$ de la fonction adaptative (AF) est calculée par :

$$\alpha = g\,(i,\,lsnr) = a(i) \cdot lsnr + b(i)$$

où a (i), b (i) sont des nombres réels dépendant d'un indice de sous-bande i et la seconde variable $\beta$ de la fonction adaptative (AF) est calculée par :

$$\beta = h(lsnr, \varphi) = \begin{cases} \beta_1 & \varphi \geq d \ et \ lsnr > e_2 \\ \beta_2 & \varphi \geq d \ et \ e_1 < lsnr \leq e_2 \\ \beta_3 & \varphi \geq d \ et \ lsnr \leq e_1 \\ \beta_4 & sinon \end{cases}$$

où $\beta 1 < \beta 2 < \beta 3$ et $\beta 4$ et d et $e_1 < e_2$ sont des nombres entiers ou flottants et où lsnr est le rapport signal sur bruit à long terme (lsnr).

**8.** Procédé selon la revendication 7,
dans lequel le rapport signal sur bruit segmenté modifié (mssnr) déduit est comparé à une valeur de seuil (thr) qui est fixée à :

$$thr = \begin{cases} k_1 & lsnr > e_2 \\ k_2 & e_1 < lsnr \leq e_2 \\ k_3 & lsnr \leq e_1 \end{cases}$$

où $k_1 > k_2 > k_3$ et $e_1 < e_2$ sont des nombres entiers ou flottants et où la décision de détection d'activité vocale (VADD) est générée comme suit :

$$VADD = \begin{cases} 1 & mssnr > thr \\ 0 & mssnr \leq thr \end{cases}$$

où VADD = 1 représente une trame active avec présence d'activité vocale et VADD = 0 représente une trame passive avec absence d'activité vocale.

**9.** Appareil de détection d'activité vocale destiné à détecter une activité vocale dans un signal audio d'entrée constitué de trames,

l'appareil de détection d'activité vocale (VAD) comprenant :

une unité de calcul de paramètre VAD sur la base du rapport signal sur bruit, qui est configurée pour calculer un rapport signal sur bruit (snr) pour chaque sous-bande d'une trame d'entrée appliquée et d'un paramètre spécifique de sous-bande (sbsp) sur la base du rapport signal sur bruit (snr) respectif pour chaque sous-bande en utilisant une fonction adaptative (AF), dans lequel au moins un paramètre de la fonction adaptative est sélectionné en fonction d'une caractéristique de bruit du signal audio d'entrée, et pour déduire un rapport signal sur bruit segmenté modifié (mssnr) en ajoutant les paramètres spécifiques de sous-bande (sbsp) ; et

une unité génératrice de décision de détection d'activité vocale (VAD) qui est configurée pour générer une décision de détection d'activité vocale (VADD) en comparant le rapport signal sur bruit segmenté modifié (mssnr) à une valeur seuil,

dans lequel le rapport signal sur bruit segmenté modifié (mssnr) est calculé comme suit :

$$mssnr = \sum_{i=1}^{N} \left( f\left( snr(i) \right) + \alpha \right)^{\beta}$$

où snr(i) est le rapport signal sur bruit de la i-ième sous-bande de la trame d'entrée, N est le nombre de sous-bandes de fréquence en lesquelles ladite trame d'entrée est divisée, $(f(snr(i))+\alpha)^{\beta}$ est la fonction adaptative (AF) utilisée pour calculer le paramètre spécifique de sous-bande sbsp(i), et $\alpha$, $\beta$ sont deux variables configurables de la fonction adaptative (AF).

10. Appareil selon la revendication 9, dans lequel la caractéristique de bruit du signal audio d'entrée est un rapport signal sur bruit à long terme.

11. Appareil de détection d'activité vocale selon la revendication 9,
ledit appareil comprenant une unité de détermination de caractéristique de bruit qui est configurée pour déterminer la caractéristique de bruit (nc) du signal d'entrée sur la base au moins d'une trame d'entrée reçue du signal audio d'entrée.

12. Dispositif de traitement de signal audio comprenant un appareil de détection d'activité vocale selon l'une des revendications 9 à 11 précédentes, et une unité de traitement de signal audio destinée à traiter un signal d'entrée audio en fonction d'une décision de détection d'activité vocale (VADD) fournie par l'appareil de détection d'activité vocale.

Fig. 1

Fig.2

VOICE ACTIVITY DETECTION (VAD)
APPARATUS 1

AUDIO SIGNAL PROCESSING
UNIT 8

AUDIO SIGNAL PROCESSING DEVICE 7

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2159788 A1